Europäisches Patentamt

European Patent Office

Office européen des brevets

(19)

(11) Veröffentlichungsnummer: **0 196 337**

**A1**

(12) # EUROPÄISCHE PATENTANMELDUNG

(21) Anmeldenummer: 85103198.9

(22) Anmeldetag: 19.03.85

(51) Int. Cl.⁴: **B 01 D 46/10**
**B 01 D 45/14**

(43) Veröffentlichungstag der Anmeldung:
08.10.86  Patentblatt 86/41

(84) Benannte Vertragsstaaten:
AT BE CH DE FR GB IT LI LU NL SE

(71) Anmelder: Progress-Elektrogeräte Mauz & Pfeiffer
GmbH & Co.
Postfach 1869 Nürtinger Strasse 68
D-7440 Nürtingen 10(DE)

(72) Erfinder: Illner, Otto
Oststrasse 4
D-4708 Kamen(DE)

(72) Erfinder: Jacob, Gernot
Stahlbühlstrasse 35
D-7251 Weissach-Flacht(DE)

(72) Erfinder: Maier, Robert
Zeppelinstrasse 20
D-7031 Nufringen(DE)

(74) Vertreter: Patentanwälte Kirschner & Grosse
Herzog-Wilhelm-Strasse 17
D-8000 München 2(DE)

(54) Verfahren und Vorrichtung zum Entfernen von Schwebstoffen, wie Stäube und Aerosole, aus der Umluft oder aus Gasströmen.

(57) Die Erfindung betrifft ein Verfahren und eine Vorrichtung zum Entfernen von Schwebstoffen, wie Stäuben und Aerosolen, aus einem Luft- oder Gasstrom. Dies geschieht mittels eines rotierenden Filters.

Hierbei werden gemäß dem erfinderischen Verfahren die Schwebstoffe in einem rotierenden Schaumstoff-Filter (2) aufgefangen, indem man die verunreinigte Umgebungsluft bzw. den Luftoder Gasstrom mittels der rauh strukturierten Oberfläche des rotierenden Schaumstoff-Filters aus einer axialen Strömung in eine radiale Strömung umlenkt, derart, daß die verunreinigte Luft oder die Gase den Schaumstoff-Filter um- und durchströmen. Die Vorrichtung zur Ausübung des Verfahrens besteht demgemäß darin, daß der rotierende Schwebstoff-Filter (1) ganz oder teilweise eine schaumstoffartige Struktur aufweist.

FIG. 1

PATENTANWÄLTE · · · · · 0196337

KLAUS D. KIRSCHNER       WOLFGANG GROSSE
DIPL.-PHYSIKER           DIPL.-INGENIEUR

                         ZUGELASSENE VERTRETER VOR DEM
                         EUROPÄISCHEN PATENTAMT

                         HERZOG-WILHELM-STR. 17
                         D-8000 MÜNCHEN 2

                         IHR ZEICHEN:
                         YOUR REFERENCE:

                         UNSER ZEICHEN:   P 5841 Gs/w
                         OUR REFERENCE:

                         DATUM: 19. März 1985

Progress-Elektrogeräte

Mauz & Pfeiffer GmbH & Co.

Nürtinger Straße 68

7440 Nürtingen 10

---

Verfahren und Vorrichtung zum Entfernen von Schwebstoffen,
wie Stäube und Aerosole, aus der Umluft oder aus Gasströmen

---

Gegenstand der Erfindung ist ein Verfahren zum trocknen
Entfernen von Schwebstoffen, vornehmlich von staubförmigen
Bestandteilen, aber auch von Aerosolen, aus der Umluft bzw.
aus Gasströmen mittels eines rotierenden Filters, sowie eine
Vorrichtung zur Durchführung dieses Verfahrens.

Entstaubungsanlagen kommen insbesondere in Betriebsräumen
und in Anlagen zur Anwendung, nämlich dort, wo größere Staubmengen in der Zeiteinheit in die Umluft eines Raumes bzw. in
die freie Atmosphäre gelangen, z.B. in Steinbearbeitungsbetrieben, Mühlen, Asbestverarbeitungs-, Textil- und Spinnereibetrieben u. dgl. Zum Entstauben dienen Naß- oder Trockenentstaubungs-Anlagen mit statischen oder solche mit umlaufenden Filtern. Derartige Vorrichtungen und Anlagen sind meist
recht aufwendig und damit zur Anwendung, z.B. im häuslichen
Bereich aber auch in Betriebsräumen mit vergleichsweise ge-

0196337

ringem Staubanfall - erinnert sei hier an Verunreinigung der
Luft durch Raucher - wenig geeignet. Es ist zwar bekannt,
in sogenannten Raum-Klimageräten Staubfilter einzubauen,
bei denen mittels eines Gebläses die Umluft durch einen
Staubfilter gesogen oder getrieben wird. Doch auch hier
besteht der Nachteil eines vergleichsweise hohen Aufwandes,
zumal es nicht immer erforderlich ist, das Raumklima zu
ändern.

Ein weiterer Nachteil besteht darin, daß bei den bekannten
Luft- und Gasfiltern, die Filteroberfläche sich recht bald
mit Staubteilchen belegt, so daß sich die Filterporen weitgehendst zusetzen. Das hat zur Folge, daß die Filter des
öfteren ausgetauscht bzw. je nach Art des Filters gereinigt
werden müssen.

Zweck der Erfindung ist es, diese vorgenannten Nachteile zu
vermeiden, wobei die der Erfindung zugrunde liegende Aufgabe
insbesondere darin besteht, ein Verfahren und eine Vorrichtung
zum Entfernen von Schwebstoffen, wie Feinstäubchen und Aerosolen für häusliche und kleinere Betriebsräume zu schaffen,
mittels welchen es möglich ist, bei geringem technischen Aufwand und hohem "Sättigungsgrad" des Filters mit Schwebstoffen
eine Reinigung der Luft bzw. eines Gases herbeizuführen.

Die geschieht gemäß dem erfinderischen Verfahren dadurch,
daß man den zu reinigenden Luft- oder Gasstrom mittels des
rotierenden Filters erzeugt und dabei den Luft- oder Gasstrom
im rotierenden Filtermaterial aus einer Axialströmung in eine
Radialströmung umlenkt.

Dabei wird in vorteilhafter Weise ausgenutzt, daß sich die
Strömungsrichtung eines Lüfters ändert, wenn man die Lüfterflügel mit einem Schaumstoffbelag versieht; die Luft tritt
in das Schaumstoffmaterial ein, kehrt sich dort in eine
Radialströmung, wobei die in der Luft enthaltenen Schwebstoffe

- 3 -

0196337

im Filtermaterial verbleiben. Dabei ergibt sich, bedingt durch
die auftretenden Zentrifugalkräfte im Schaumstoff-Filtermaterial,
daß die Schwebstoffe im Filter radial nach außen wandern und
sich dort verdichten, während die dem Luftstrom zugekehrte
Außenfläche des Filters vergleichsweise sauber bleibt. Besteht
der Schaumstoff aus einem schwammartigen Material, so ist er
auch auswaschbar, d.h. er ist auch wiederverwendbar.

Vorteilhaft ist es auch, wenn man die Porengröße des rotierenden
Schaumstofffilters unterschiedlich groß gestaltet, derart, daß
die Porengröße mit zunehmendem Abstand von der Drehachse
und/oder bei geteiltem, durchbrochenen Filter entgegen seiner
Drehrichtung kleiner wird.

Die Reinigung des rotierenden Filters kann dadurch verbessert
werden, daß man durch Einschnitte, Öffnungen, Wellungen im
bzw. am Filter oder dem Flügelrand ähnliche Gestaltung des
rotierenden Filters, Prallflächen schafft, an denen die Staubteilchen bevorzugt in das Filtermaterial eintreten. Dabei nutzt
man die Massenträgheit der Schwebstoffe,im Filtermaterial
zu wandern bzw. sich zu verdichten. Man erhält so eine große
Aufnahmekapazität des Filters für Schwebstoffteilchen.

Das erfinderische Verfahren ist vielfältig zum Entfernen von
Schwebstoffteilchen aus der Umluft sowie aus Luft- und Gasströmen anwendbar. Je nach Art des als Schaumstoff strukturierten
Materials kommt es bei rotierendem Filter zu einer mehr oder
weniger großen elektrostatischen Aufladung. Auch dieser Effekt
wird gemäß der Erfindung zum Auffangen der Schwebstoffteilchen
genutzt.

Die Vorrichtung zur Ausübung des Verfahrens besteht vor allem
darin, daß der ganz oder teilweise aus Schaumstoff bestehende,
umlaufende Filter die zu reinigende Luft oder Gas selbst
ansaugt. Dies geschieht insbesondere durch die Wirbelbildung
der Luft oder des Gases an der durch die Struktur des Schaumstoffes bedingten rauhen Oberfläche des Filters. Durch die Zentrifugalkräfte entsteht eine radiale Strömung turbulenter Luft oder Gase, welche zur Folge hat, daß die zu reinigende Luft oder das Gas vornehmlich senkrecht zur Filterscheibe bzw. achsparallel zur Drehachse des Filters der Vorrichtung zuströmt. Die Wirkung des Filters läßt sich auch dadurch verbessern, daß man diesen in Form eines Flügelrades, einer mit Öffnungen versehenen Scheibe oder in Form einer mit keilförmigen Schaumstoff-Segmenten versehenen oder aus solchen gebildeten Platte gestaltet. Es entstehen so Prallflächen, an welchen einerseits die in der Luft oder dem Gas enthaltenen Schwebstoffteilchen leicht in den Schaumstoff-Filter eindringen und andererseits Zonen erhöhter Wirbelbildung, welche ebenfalls zum Anhaften und Eindringen der Schwebstoffe in den Filter beitragen. Dabei sind z.B. Flügelräder mit sehr großem Anstellwinkel der Flügelblätter als Schaumstoff-Filter weniger wirkungsvoll als solche mit einem Anstellwinkel der Flügelblätter, wie man sie bei Tischlüftern verwendet.

Der gemäß der Erfindung gebildete Filter kann auch in Kombination mit anderen, bei Lüftern, Luft- und Gasfiltern bekannten Vorrichtungen zur Anwendung kommen, ohne daß dadurch der Rahmen der Erfindung verlassen wird.

Weitere Einzelheiten der Erfindung sind aus den Unteransprüchen ersichtlich.

In den Zeichnungen sind verschiedene Ausführungsformen von nach dem erfinderischen Verfahren arbeitenden Vorrichtungen zum Entfernen von Schwebstoffen aus Luft- und Gasströmen dargestellt. Es zeigen:

Fig. 1          einen als Schwebstoff-Filter arbeitenden Lüfter;

Fig. 2          eine Darstellung zur Erläuterung der Wirkungsweise des Filters;

Fig. 3          einen aus keilförmigen Platten gebildeten Filter,

Fig. 4          einen aus einer Scheibe gebildeten Filter,

Fig. 5          einen in Form eines Überzuges gebildeten Filter,

Fig. 6          einen einem Flügelblatt ähnlicher Filter,

Fig. 7          einen in Form einer Walze oder Rolle ausgebildeten Filter,

Fig. 8          einen Lüfter, der mit einem Filter zusammenarbeitet, und

Fig. 9          einen Lüfter, der mit einem Filter im Kombination arbeitet.

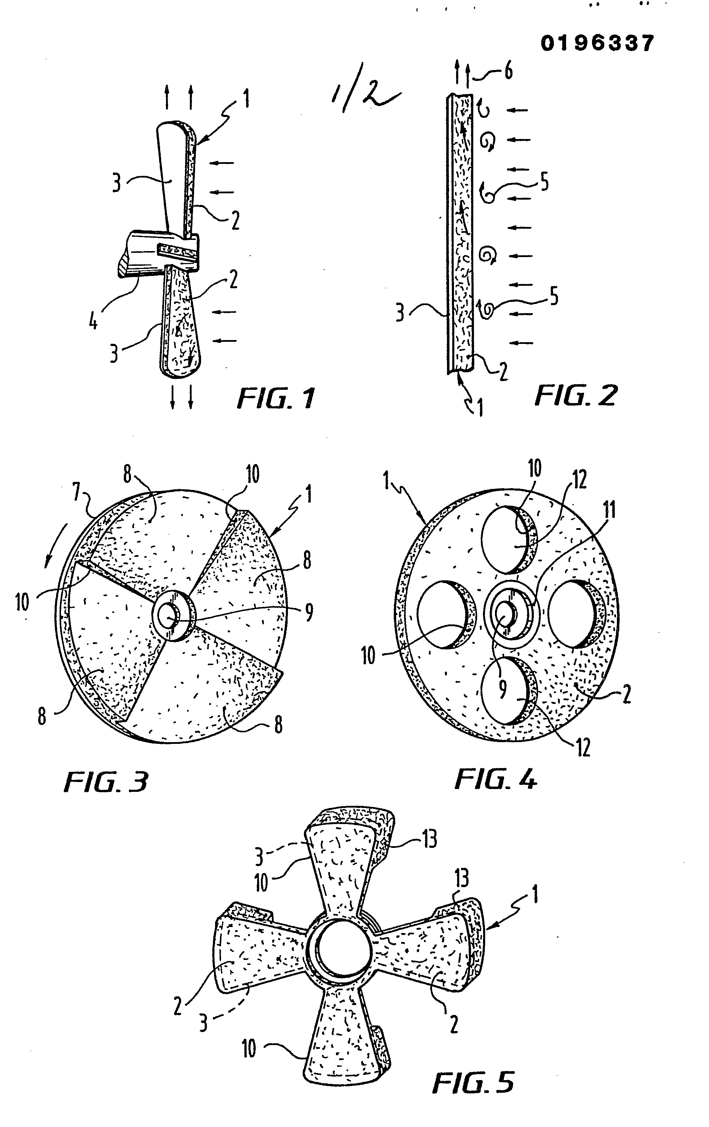

Gemäß Fig. 1 besteht der Schwebstoff-Filter aus einem Schaumstoffbelag 2, der hier auf den Flügelblättern 3 eines Ventilators 4, von dem nur die Nabe gezeigt ist, aufgebracht ist. Beim
Betrieb des Lüfters ist die Reibung der Luft an den mit den
Schaumstoff belegten Blattflächen so groß, daß eine durch die
(normalen ) Anstellwinkel der Flügelblätter bedingte Blas-
oder Saugströmung der Luft nicht zustande kommt; es entsteht
vielmehr eine radiale Luftströmung entlang des Schaumstoffbelages 2 der Flügelblätter 3. Dies hat zur Folge, daß die in
der Luft enthaltenen Schwebstoffe in die Poren des Schwebstofffilters 1 eintreten und sich dort ansammeln bzw. auch im
Filter wandern.

- 6 -

0196337

Fig. 2 zeigt einen Ausschnitt eines Flügelblattes 3 in vergrößerter Ansicht. Die den rauh strukturierten Schwebstoff-Filter 1 umgebende Luft (oder das Gas) gerät bei einer Rotation des Filters in heftige Wirbelbewegung, wie bei 5 angedeutet, wobei die Wirbel, radial in Richtung der Pfeile 6 im nahen Grenzbereich des Schaumstoffbelages 2 entlang wandern. Die sich in den Poren des Schaumstoffes anlagernden Schwebstoffteilchen wandern, bedingt durch die Zentrifugalkraft im Filtermaterial - nämlich im Schaumstoff - radial nach außen und verdichten sich dort. Dies hat zur Folge, daß die Aufnahmekapazität des Filtermaterials nahezu maximal nutzbar ist. Es ist daher vorteilhaft, diesen Effekt dadurch weiter zu nutzen, indem man mit zunehmendem Abstand von der Drehachse des Filters die Anzahl der Poren im Schaumstoff durch eine Verkleinerung derselben erhöht. Eine weitere Möglichkeit zur Erhöhung der Aufnahme-Kapazität besteht aber auch darin, durch eine Verg$_r$ößerung des Filtervolumens im Bereich des radialen Endes, und zwar durch die Breiten- und/oder Dickenabmessungen den gewünschten Effekt herbeizuführen. Je nach Art des verwendeten Schaumstoffes nutzt man auch die bei einer Rotation des Filters auftretende elektrostatische Aufladung des Filter-materials zum Auffangen der Schwebstoffteilchen.

Fig. 3 zeigt einen Schwebstoff-Filter 1, bestehend aus einer Trägerscheibe 7, mit aus Schaumstoff gebildeten, keilförmigen Segmenten 8. Die Trägerscheibe besitzt eine mittige Bohrung 9 zur Aufnahme und Befestigung des Filters auf einer Welle eines Antriebsaggregates. Wie gefunden wurde, sind insbesondere die vorstehenden Prallflächen 10 besonders zum Übergang der Schwebstoffe in den rotierenden Filter geeignet. Hierbei sei indessen darauf hingewiesen, daß rotierende Schaumstoff-Filter, welche nach Art eines mehrflügeligen Ventilators umlaufen und deren Flügelblätter axial zur Drehachse gestellt sind, weniger günstig sind. Obwohl sie große Prallflächen besitzen, wird jedoch die zu reinigende Luft oder das Gas im wesentlichen nur "umgerührt".

Um diesen "Rühreffekt" zu vermeiden, ist auch darauf zu achten, daß die Lüfterflügel mit einer gewissen Mindestdrehzahl umlaufen. Diese Drehzahl ist in Abhängigkeit von der Lüfterflügelzahl und -gestalt versuchsweise zu ermitteln. Es soll auf jeden Fall sicher gestellt sein, daß eine optimale Förderleistung bei der Luftumwälzung erzielt wird.

Fig. 4 zeigt ebenfalls einen plattenförmigen Schwebstoff-Filter 1. Er ist im Gegensatz zu den anderen Ausführungsformen aus einem festen Schaumstoff gebildet und kann - je nach Verwendungszweck z.B. bei heißen Abgasen, oder in reaktionsfähigen Gasen - aus porigen, nach Art von Schaumstoff strukturierten, keramischen, tonigen und dgl. Massen bestehen. Zur Befestigung des Filters mit seiner Antriebswelle dient eine Trägerbuchse 11, auf welche das Filtermaterial z.B. aufgesintert ist. Zur Erzeugung der Prallflächen 10 ist der Schwebstoff-Filter mit Öffnungen bzw. Einschnitten 12 versehen, welche im Beispiel kreisförmig gestaltet sind.

In Fig. 5 ist ein Schwebstoff-Filter 1 in Form eines Überzugs 2 für die Flügelblätter 3 (Fig.1) eines Lüfters dargestellt; er besteht aus einem elastischen Schaumstoff und ist an den Enden des Überzugs mit Taschen 13 versehen. Zum Befestigen dieses Schwebstoff-Filters werden zunächst zwei benachbarte Flügelblätter in ebenfalls benachbarte Taschen eingeschoben, worauf dann durch leichtes Ziehen die beiden anderen Überzug-Filterflügel gestreckt und mit ihren Taschen über die gegenüberliegenden Flügelblätter geschoben werden. Ein derartiger Schwebstoff-Filter ist einfach herzustellen, leicht auswechselbar, aber auch einfach zu reinigen bzw. auszuwaschen; er kann bei Lüftern als Zusatzteil mitgeliefert, aber auch als Verbrauchsgegenstand in Mehrfachpackungen vertrieben werden.

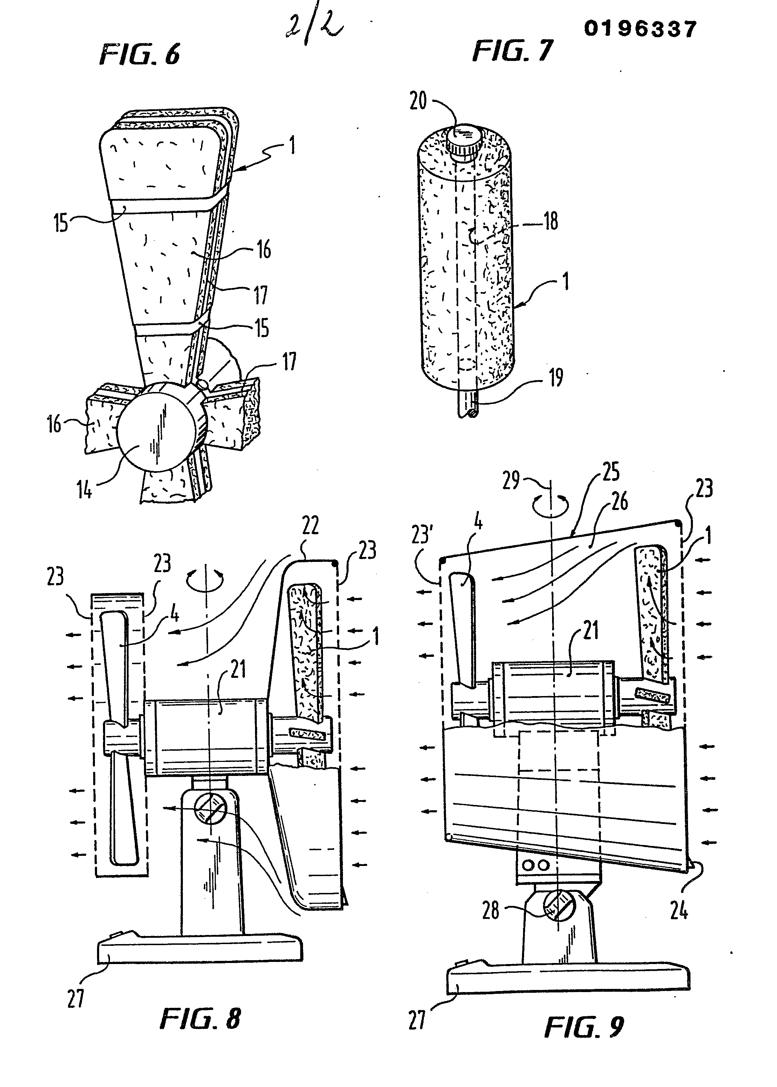

Der in Fig. 6 dargestellte Schwebstoff-Filter 1 ist in Form
eines Flügelblattes z.B. eines Ventilators gebildet. Mit
der Nabe 14 sind anstelle von Flügelblättern Rahmen 15 verbunden, in denen Filterkissen 16 einsetzbar sind. Diese
Filterkissen sind ebenfalls aus einem elastischen Schaumstoff
gebildet, so daß sie leicht in die jeweiligen Rahmen einsetzbar, aber auch zum Reinigen oder Auswechseln gegen neue
Filterkissen entnehmbar sind. Bei dieser Ausbildung der
Schaumstoff-Filter ist es wichtig, daß die Kanten der Prallflächen 10 von den Rahmen freibleiben, damit die Schwebstoffteilchen gut in den Filter eintreten können. Es versteht
sich in diesem Zusammenhang, daß der Rahmen auch in anderer
Form gebildet sein kann, z.B. derart, daß der Nabensteg 17
frontal verläuft.

Wie ersichtlich, ist der Schwebstoff-Filter 1 gemäß Fig.7
in Form einer Walze gebildet; er besteht ebenfalls aus
einem Schaumstoff und besitzt eine axiale Bohrung 18,
mittels welcher der Zylinder auf einer radial zur Nabe 14
verlaufenden Achse 19 aufsetzbar und, z.B. mit einer
Schraubenkappe 20 befestigbar ist. Auf der Nabe sind mehrere
Achsen 19 angeordnet, so daß sich eine, der Leistung des
Antriebes entsprechend große, Filterfläche ergibt. Anstelle
des hier zylindrisch dargestellten Filters kann dieser
auch eine andere Form, z.B. eine kegelförmige, prismatische
oder dgl., aufweisen.

Fig. 8 zeigt einen Lüfter bzw. Ventilator 4, der mit einem
Schwebstoff-Filter 1 zusammenarbeitet; der Ventilator und
und der Schwebstoff-Filter besitzen einen gemeinsamen
Antriebsmotor 21. Hier ist der umlaufende Schaumstoff-
Filter 1 mittels einer Kappe 22 gegenüber dem Ventilator
abgeschirmt, derart, daß die gereinigte Luft nicht unmittelbar in den Wirkungsbereich des Ventilators strömt. Beide Rotoren, nämlich der Schwebstoff-Filter 1, wie auch der Ventilator 4, sind mittels eines Schutzgitters 23 gegen einen Zugriff gesichert.

Es ist ferner denkbar, das Schutzgitter 23 an seiner Innenseite mit einem statischen Filter gleicher Struktur wie der umlaufende dynamische Filter zu versehen. Dieser statische Filter nimmt gegebenenfalls radial abströmende Schmutzteilchen auf, wobei eine Verschmutzung des statischen Filters als Übersättigung des dynamischen Filters mit Schmutzteilchen gewertet werden kann, also als Anzeichen dafür, daß der dynamische Filter gereinigt oder ausgetauscht werden muß.

Bei dem Lüfter und Schwebstoff-Filter gemäß Fig. 9 wird im Gegensatz zur Fig. 8 eine kombinierte Wirkungsweise angestrebt. Hier wird die durch den rotierenden Schwebstoff-Filter 1 radial abströmende, gereinigte Luft mittels einer Haube 25 zu dem Ventilator 4 umgelenkt und abgeblasen. Zum gelegentlichen Reinigen der Schaumstoff-Filter ist das vor dem Filter gelegene Schutzgitter 23 mittels Überzugverschlusses 24 mit der Haube 25 verbunden. In entsprechender Weise kann auch das vor dem Ventilator gelegene Schutzgitter 23 abnehmbar gebildet sein, um Reinigungen, Reparaturen oder dgl. zu ermöglichen. Im Raum 26 der Haube 25 können weitere - wie z.B. bei Klimageräten übliche - Luftbefeuchter, Kühler oder Erwärmer angeordnet sein. Wie bei Ventilatoren bekannt, ist dieser in einem Ständer 27 schwenkbar und mittels der Handhabe 28 lös- und feststellbar gelagert; die aus dem Motor, dem Schaumstoff-Filter, dem Ventilator und der Haube bestehende Einheit ist ferner - wie ebenfalls bei Ventilatoren üblich - selbsttätig, periodisch um die
Stützachse 29 - wie gestrichelt angedeutet - schwenkbar.

Die Anwendungsmöglichkeit des gemäß der Erfindung arbeitenden
und gebildeten Filters für Schwebstoffe ist nicht auf
die gezeigten Ausführungsformen beschränkt. So ist es z.B.
nach der Erfindung denkbar, den aus Schaumstoff gebildeten,
umlaufenden Filter in Deckenkassetten von Räumen anzuordnen,
wobei die Radien der Filterflügel oder Platten sich nach den
technischen Gegebenheiten richten. Auch besteht die Möglichkeit, die rotierenden Schaumstoff-Filter in Rohrleitungen
strömender Gase zu installieren, wobei der Antrieb für den
oder die Filter  motorisch, aber auch durch das strömende Medium
unter Zuhilfenahme eines Antriebsmotors selbst erfolgen kann.

0196337

Bezugszeichen-Register

1  Schwebstoff-Filter
2  Schaumstoff-Belag
3  Flügelblätter
4  Ventilator
5  Wirbel (Luft, Gas)
6  Richtungspfeil (Luft, Gas)
7  Trägerscheibe (für 1)
8  Segmente (für 1)
9  Bohrung (in 1 od. 7)
10 Prallflächen (bei 1 od. 2)
11 Trägerbuchse (für 1)
12 Einschnitte (in 1)
13 Taschen (für 1)
14 Nabe (für 4 und 1)
15 Rahmen (für 1)
16 Filterkissen (für 1, 15)
17 Nabensteg (für 1, 15, 16)
18 Bohrung (für 1)
19 Achse (für 1, 18)
20 Schraubkappe (für 1, 19)
21 Antriebsmotor (für 1, 4)
22 Kappe (für 1)
23 u. 23' Schutzgitter (für 1 und 4)
24 Überzugverschluß (für 23 u. 23')
25 Haube (für 1 u. 4)
26 (Hauben-)Raum (bei 1 u. 4)
27 Ständer (für 1 und 4)
28 Handhabe (für 27)
29 Stützachse (für 1, 4, 21, 25)

PATENTANWÄLTE

**KLAUS D. KIRSCHNER**
DIPL.-PHYSIKER

**WOLFGANG GROSSE**
DIPL.-INGENIEUR

ZUGELASSENE VERTRETER VOR DEM
EUROPAISCHEN PATENTAMT

HERZOG-WILHELM-STR. 17
D-8000 MÜNCHEN 2

IHR ZEICHEN:
YOUR REFERENCE:

UNSER ZEICHEN: P 5841 Gs/w
OUR REFERENCE:

DATUM: 19. März 1985

**0196337**

Progress-Elektrogeräte
Mauz & Pfeiffer GmbH & Co
Nürtinger Straße 68
7440 Nürtingen 10

## Patentansprüche

1. Verfahren zum Entfernen von Schwebstoffen, wie Stäuben oder Aerosolen, aus einem Luft- oder Gasstrom, durch Auffangen dieser Stoffe in einem rotierenden Filter, **dadurch gekennzeichnet,** daß die Schwebstoffe in einem rotierenden Schaumstoff-Filter aufgefangen werden, indem die verunreinigte Umgebungsluft bzw. der Luft- oder Gasstrom mittels der rauh strukturierten Oberfläche des rotierenden Schaumstoff-Filters aus einer axialen Strömung in eine radiale Strömung umgelenkt wird, derart, daß die verunreinigte Luft oder die Gase den Schaumstoff-Filter um- und durchströmen.

2. Verfahren nach Anspruch 1, **dadurch gekennzeichnet,** daß zur Verbesserung des Eintritts der Luft oder des Gases in den rotierenden Schaumstoff-Filter dieser mit Prallflächen versehen wird und der im Bereich dieser Flächen auftretende Überdruck zum Einpressen der Luft in den Filter genutzt wird.

3. Verfahren nach Anspruch 1 oder 2,
d a d u r c h   g e k e n n z e i c h n e t , daß
die Porengröße des rotierenden Schaumstoff-Filters unterschiedlich groß gestaltet wird, und zwar derart, daß die
Porengröße mit zunehmendem Abstand von der Drehachse
kleiner und/oder bei geteilten oder durchbrochenen Filtern
entgegen der Drehrichtung des Filters kleiner wird.

4. Verfahren nach einem der Ansprüche 1 bis 3,
d a d u r c h   g e k e n n z e i c h n e t , daß
zur Erleichterung des Reinigens des rotierenden Filters
als Filtermaterial ein schwammförmiger Schaumstoff verwendet wird.

5. Verfahren nach einem der Ansprüche 1 bis 4,
d a d u r c h   g e k e n n z e i c h n e t , daß
zum Reinigen reaktionsfähiger und/oder erwärmter Gase
schaumstoffähnlich strukturierte resistente Filtermaterialien
verwendet werden.

6. Verfahren nach einem der Ansprüche 1 bis 5,
d a d u r c h   g e k e n n z e i c h n e t , daß
der Luft- oder Gasstrom mittels des rotierenden
Schaumstoff-Filters erzeugt wird.

7. Vorrichtung zum Entfernen von Schwebstoffen aus einem
Luft- oder Gasstrom mit einem rotierenden Filter,
d a d u r c h   g e k e n n z e i c h n e t ,
daß der Schwebstoff-Filter (1) eine schaumstoffartige
Struktur aufweist.

8. Vorrichtung nach Anspruch 7,
d a d u r c h   g e k e n n z e i c h n e t , daß
der rotierende Filter ganz oder teilweise aus einem
Schaumstoff besteht.

9. Vorrichtung nach Anspruch 7,
d a d u r c h   g e k e n n z e i c h n e t , daß
der Schwebstoff-Filter (1) aus einem Träger (3, 7) und
aus einem Schaumstoffbelag (2) besteht.

10. Vorrichtung nach einem der Ansprüche 7 bis 9,
d a d u r c h   g e k e n n z e i c h n e t , daß
der Schwebstoff-Filter (1) mit Prall-Flächen (10)
versehen ist.

11. Vorrichtung nach einem der Ansprüche 7 bis 10,
d a d u r c h   g e k e n n z e i c h n e t , daß
der in der Art eines Flügelrades (3) gebildete Träger mit
einem über die Flügelblätter gestreiften Schaumstoffbelag
(2, Fig. 5) überzogen ist.

12, Vorrichtung nach den  Ansprüchen 7 oder 9,
d a d u r c h   g e k e n n z e i c h n e t , daß
der Schwebstoff-Filter (1) aus einer Trägerscheibe (7)
besteht, auf der Schaumstoffsegmente (8) angebracht sind.

13, Vorrichtung nach den Ansprüchen 7 oder 10,
d a d u r c h   g e k e n n z e i c h n e t , daß
der Schaumstoff-Filter (1) aus einem porig strukturierten
Material besteht, wobei die Porengröße  mit zunehmendem
Abstand von der Drehachse und/oder entgegen der Drehrichtung
mit zunehmendem Abstand von der oder den Prallflächen
kleiner bemessen ist.

14. Vorrichtung nach den Ansprüchen 7 oder 10,
d a d u r c h   g e k e n n z e i c h n e t , daß
der Schaumstoff-Filter (1) nach Art einer grobstrukturierten
Schleifscheibe gebildet und mit einer Trägerbuchse (11)
verbunden ist.

15. Vorrichtung nach einem der Ansprüche 7 bis 14,
d a d u r c h   g e k e n n z e i c h n e t , daß
mehrere Schaumstoff-Filter (1) auf einer gemeinsamen
Antriebswelle hintereinander angeordnet sind.

16. Vorrichtung nach einem der Ansprüche 7 bis 10,
d a d u r c h   g e k e n n z e i c h n e t , daß
der Schaumstoff-Filter (1) mit einem Ventilator (4)
im Verbund (Fig. 8 und 9) angeordnet ist.

17. Vorrichtung nach einem der Ansprüche 7 bis 16,
d a d u r c h   g e k e n n z e i c h n e t , daß
der rotierende Schaumstoff-Filter (1) in einer Luftoder Gasleitung angeordnet ist.

18. Vorrichtung nach einem der Ansprüche 7 bis 17,
d a d u r c h   g e k e n n z e i c h n e t , daß
der rotierende Schaumstoff-Filter (1) in einer Wand-
oder Deckenkassette eines Raumes angeordnet ist.

19. Vorrichtung nach einem der Ansprüche 7 bis 18,
d a d u r c h   g e k e n n z e i c h n e t , daß
der rotierende Schaumstoff-Filter (1) im Bereich einer
Staubquelle angeordnet ist.

Anmeldung Nr. 85103198.9
Progress - Elektrogeräte Mauz & Pfeiffer GmbH & Co.

**ABGEÄNDERTE ANSPRÜCHE**

Patentansprüche

1. Vorrichtung zum Entfernen von Schwebstoffen, wie Stäuben oder Aerosolen, aus einem Luft- oder Gasstrom mit einem rotierenden Schwebstoff-Filter (1), der eine schaumstoffartige Struktur aufweist,
d a d u r c h   g e k e n n z e i c h n e t,
daß der Schwebstoff-Filter (1) mit Prall-Flächen (10) zur Verbesserung des Eintritts der Luft oder des Gases in den Filter versehen ist.

2. Vorrichtung nach Anspruch 1, wobei der Schwebstoff-Filter (1) aus einem Träger (3, 7) und einem Schaumstoffbelag (2) besteht,
dadurch gekennzeichnet, daß der in der Art eines Flügelrades (3) gebildete Träger mit einem über die Flügelblätter gestreiften Schaumstoffbelag (2, Fig. 5) überzogen ist.

3. Vorrichtung nach Anspruch 1 oder 2,
dadurch gekennzeichnet, daß der Schwebstoff-Filter (1) aus einer Trägerscheibe (7) besteht, auf der Schaumstoffsegmente (8) angebracht sind.

4. Vorrichtung nach Anspruch 1 oder 2,
dadurch gekennzeichnet, daß der Schaumstoff-Filter (1)
aus einem porig struktierten Material besteht, wobei die
Porengröße mit zunehmendem Abstand von der Drehachse und/
oder entgegen der Drehrichtung mit zunehmendem Abstand von
der oder den Prallflächen kleiner bemessen ist.

5. Vorrichtung nach Anspruch 1 oder 2,
dadurch gekennzeichnet, daß der Schaumstoff-Filter (1)
nach Art einer grobstrukturierten Schleifscheibe gebildet
und mit einer Trägerbuchse (11) verbunden ist.

6. Vorrichtung nach einem der Ansprüche 1 bis 5,
dadurch gekennzeichnet, daß der Schaumstoff-Filter (1)
zum Reinigen reaktionsfähiger und/oder erwärmter Gase aus
einem schaumstoffähnlich strukturierten resistenten Material
besteht.

7. Vorrichtung nach einem der Ansprüche 1 bis 6,
dadurch gekennzeichnet, daß mehrere Schaumstoff-Filter (1)
auf einer gemeinsamen Antriebswelle hintereinander angeordnet sind.

8. Vorrichtung nach einem der Ansprüche 1 bis 7,
dadurch gekennzeichnet, daß der Schaumstoff-Filter (1)
mit einem Ventilator (4) im Verbund (Fig. 8 und 9) angeordnet ist.

9. Vorrichtung nach einem der Ansprüche 1 bis 8,
dadurch gekennzeichnet, daß der rotierende Schaumstoff-
Filter (1) in einer Luft-oder Gasleitung angeordnet ist.

**0196337**

ABGEÄNDERTE
ANSPRÜCHE

10. Vorrichtung nach einem der Ansprüche 1 bis 9,
dadurch gekennzeichnet, daß der rotierende Schaumstoff-
Filter (1) in einer Wand- oder Deckenkassette eines Raumes
angeordnet ist.

11. Vorrichtung nach einem der Ansprüche 1 bis 10,
dadurch gekennzeichnet, daß der rotierende Schaumstoff-
Filter (1) im Bereich eines Staubquelle angeordnet ist.

1/2

**FIG. 1**

**FIG. 2**

**FIG. 3**

**FIG. 4**

**FIG. 5**

FIG. 6

FIG. 7

FIG. 8

FIG. 9

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-B-2 016 032  (CHARBONNAGES DE FRANCE)  * Ansprüche 1,2,6-9; Figuren 1,5 * | 1,3,4, 6-9,12 ,13 | B 01 D  46/10 B 01 D  45/14 |
| A | US-A-3 126 263  (L. SCHWAB)  * Anspruch 1; Figuren 1,3,5,10 * | 1,2,6, 9,10 | |

| RECHERCHIERTE SACHGEBIETE (Int. Cl 4) |
|---|
| B 01 D  45/00 B 01 D  46/00 |

Der vorliegende Recherchenbericht wurde für alle Patentansprüche erstellt.

| Recherchenort BERLIN | Abschlußdatum der Recherche 25-10-1985 | Prüfer BERTRAM H E H |
|---|---|---|